# EUROPÄISCHE PATENTSCHRIFT

(11) **EP 2 905 136 B1**
(45) Veröffentlichungstag und Bekanntmachung des Hinweises auf die Patenterteilung: **28.03.2018**
(21) Anmeldenummer: 15153697.6
(22) Anmeldetag: 03.02.2015
(51) Int. Cl.: B41F 33/00, B65H 7/14, B65H 43/00

(54) **Verfahren und Vorrichtung zum Überwachen einer Druckweiterverarbeitungsmaschine**
Method and apparatus for monitoring a print processing machine
Procédé et dispositif de surveillance d'une machine de finition d'impression

(30) Priorität: 07.02.2014 CH 1672014
(43) Veröffentlichungstag der Anmeldung: 12.08.2015
(73) Patentinhaber: Müller Martini Holding AG, 6052 Hergiswil (CH)
(72) Erfinder: Duss, Hanspeter, 5033 Buchs (CH); Gysin, Christoph, 4466 Ormalingen (CH)

(56) Entgegenhaltungen:
- EP-A1- 1 952 986
- WO-A1-2010/009561
- DE-U1-202012 101 524
- US-A1- 2008 196 612

## Beschreibung

Die Erfindung betrifft ein Verfahren und eine Vorrichtung zum Überwachen einer Druckweiterverarbeitungsmaschine, durch die Druckprodukte nacheinander transportiert werden, bei denen eine der Druckweiterverarbeitungsmaschine zugeordnete, mit einer Recheneinheit verbundene Bilderfassungseinrichtung jeweils während eines Arbeitstakts eine Bildserie mit mindestens zwei Bildern eines Druckprodukts mit einem zeitlichen Abstand aufnimmt, wobei der Recheneinheit die Bilder übermittelt werden und die Bilder der Bildserie auf einer mit der Recheneinheit verbundenen Ausgabevorrichtung wiedergegeben werden.

Bei der Verarbeitung von Druckprodukten kommen Verarbeitungsstationen zum Einsatz, welche eine Vielzahl von Druckprodukten pro Sekunde verarbeiten können. Die Verarbeitungsgeschwindigkeit wird in diesem Zusammenhang oft in einer Anzahl Arbeitstakten pro Zeiteinheit angegeben, beispielsweise "Anzahl Arbeitstakte pro Stunde". Üblicherweise wird in einem Arbeitstakt an einem Druckprodukt ein Bearbeitungsschritt durchgeführt und/oder das Druckprodukt wird in dem Arbeitstakt um eine bestimmte Distanz weiter transportiert. Im darauffolgenden Arbeitsschritt erfolgt dann der gleiche Bearbeitungsschritt am nachfolgenden Druckprodukt bzw. wird das nachfolgende Druckprodukt um etwa die gleiche Distanz weitergefördert. Da es sich bei den Druckprodukten um flexible Produkte handelt, deren Verarbeitungsqualität in hohem Mass von der Verarbeitungsgeschwindigkeit abhängt, bereitet es in vielen Fällen Probleme, die Betriebsparameter der Verarbeitungsstationen so einzustellen, dass es bei einer vorgegebenen Verarbeitungsgeschwindigkeit, sowie beim Vergrössern oder Verkleinern der Verarbeitungsgeschwindigkeit, zu einer mängelfreien Verarbeitung der Druckprodukte kommt. Besonders problematisch hat es sich in diesem Zusammenhang erwiesen, dass die Abläufe in den Verarbeitungsstationen so schnell erfolgen, dass sie vom menschlichen Auge nicht mehr wahrgenommen werden können. Eine visuelle Kontrolle der durch Veränderung der Betriebsparameter hervorgebrachten Auswirkungen auf die Druckprodukte ist so kaum noch möglich. Zudem ist es mit bestehenden Messmitteln wie Lichtschranken, Anwesenheitskontrollen und ähnlichen Sensoren nicht möglich, die quantitative Abweichung vom idealen Ablauf zu bestimmen.

Zur Lösung dieser Probleme wird in der EP1952986 A1 ein Verfahren und eine Vorrichtung beschrieben, bei denen zunächst ein zum Arbeitstakt synchron gesteuerter Lichtblitz erzeugt wird. Durch den Lichtblitz wird für das Auge des Bedieners ein Standbild eines bewegten Vorgangs der Druckweiterverarbeitung erzeugt, welches dem Bediener erlaubt die mit blossem Auge und ohne Hilfsmittel nicht mehr auflösbaren kritischen Produktionszustände zu erfassen. Gleichzeitig mit dem durch den Lichtblitz für den Betrachter erzeugten Standbild wird mit einer Bilderfassungseinrichtung von den zu verarbeitenden Druckprodukten ein Bild pro Arbeitstakt aufgenommen. Die Maschinensteuerung wertet die Bilder aus, auf denen jeweils die Lage eines Druckprodukts ersichtlich ist, und sendet entsprechende Signale an Stellglieder, falls der Vorgang justiert werden muss.

Zusätzlich wird in der DE102007058708 A1 ein Verfahren und eine Vorrichtung beschrieben, bei denen bestimmte Bereiche der Druckmaschine mit einer Videokamera erfasst werden und die Videofilme in einer Speichereinrichtung abgelegt werden. Zur Unterstützung des Bedienpersonals bei der Einstellung und Bewältigung von schwierigen Bedienvorgängen und zur Analyse und Erkennung von Fehlfunktionen können die abgespeicherten Videodaten nachträglich über eine Datenleitung an eine beliebige Bedienstelle der Druckmaschine übertragen werden. Die aufgezeichneten Vorgänge können so zu einem späteren Zeitpunkt nochmals genau z.B. in Zeitlupe betrachtet werden.

Ferner ist in der WO 2010/009561 A1 ein Kontrollverfahren für eine Druckweiterverarbeitungsmaschine beschrieben, bei der Druckprodukte an einem optischen Sensor vorbeigeführt werden. Ein vom optischen Sensor erfasstes elektronisches Bild, welches eine perspektivische Ansicht des Druckproduktes zeigt, wird in einer Bildverarbeitungseinheit entzerrt und in ein korrigiertes Bild überführt. Das korrigierte Bild wird anschließend in der Bildverarbeitungseinheit mit einem Referenzbild verglichen und aufgrund des Vergleichs ein Signal erzeugt. Die Erzeugung des korrigierten Bildes kann dabei in Echtzeit erfolgen. Es hat sich allerdings gezeigt, dass keines der vorstehend beschriebenen bekannten Verfahren eine zuverlässige Maschineneinstellung und/oder eine permanente Überwachung der Produktionsprozesse bei hohen Verarbeitungsgeschwindigkeiten erlaubt.

Angesichts dieser Probleme im Stand der Technik liegt der Erfindung die Aufgabe zugrunde, ein Verfahren der eingangs beschriebenen Art anzugeben, welches eine einfache, zuverlässige und schneller ausführbare Einstellung und Überwachung der Betriebsparameter der Verarbeitungsstationen für Druckprodukte ermöglicht, und eine zur Ausführung entsprechender Verfahren ausgelegte Vorrichtung bereitzustellen. Diese Aufgabe wird erfindungsgemäß durch ein Verfahren zum Überwachen einer Druckweiterverarbeitungsmaschine gemäß Anspruch 1 und durch eine entsprechende Vorrichtung gemäß Anspruch 11 gelöst. Erfindungsgemäss wird die Aufgabe dadurch gelöst, dass die Wiedergabe der Bilder auf der Ausgabevorrichtung in Echtzeit erfolgt, sowie mit einer Vorrichtung, die zur Wiedergabe des ersten Bildes der Bildserie in Echtzeit, ausgelegt ist.

Unter Wiedergabe der aufgenommenen Bilder in Echtzeit wird verstanden, dass die Wiedergabe innerhalb einer vorgegebenen Zeitdauer erfolgt und kontinuierlich neue Bilder wiedergegeben werden. Die Vorrichtung zum Durchführen des erfindungsgemässen Verfahrens ist so ausgelegt, dass innerhalb der vorgegebenen Zeitdauer die Aufnahme, Übermittlung und Wiedergabe der Bilddaten zuverlässig erfolgt. Die für den Bediener erzeugte Wiedergabe der Bilder in Echtzeit kann also mit der Aufnahme der Bilder schritthalten. Im Vergleich zu dem aus der EP1952986 A1 bekannten Verfahren erlaubt das erfindungsgemässe Verfahren eine Echtzeitauswertung dynamischer Vorgänge, um so die Betriebsparameter der Verarbeitungsstationen unter Berücksichtigung dieser dynamischen Vorgänge in Echtzeit zu überprüfen und zu optimieren. Dadurch wird eine direktere, unmittelbarere, frühzeitigere und schnellere Überwachung der Produktionsprozesse erreicht und die Einstellung der Betriebsparameter der Verarbeitungsstationen verbessert und erleichtert.

Im Vergleich zu den aus der DE102007058708 A1 bekannten Verfahren kann mit Hilfe des erfindungsgemässen Verfahrens eine deutliche Zeitreduktion bei der Einstellung der Betriebsparameter der Verarbeitungsstationen erfolgen, weil die Wiedergabe der während eines Verarbeitungstakts erfolgenden Verarbeitungsvorgänge nicht auf aufgezeichneten Daten beruht sondern in Echtzeit erfolgt, so dass das Ergebnis der Änderung von Betriebsparametern durch den Bediener sofort und kontinuierlich beobachtet werden kann. Je nach Anwendung und Verarbeitungsgeschwindigkeit kann die Wiedergabe der Bilder noch während desselben Verarbeitungstakts, in dem das Bild aufgenommen worden ist, oder während den nachfolgenden Verarbeitungstakten erfolgen. Wichtig ist, dass die Wiedergabe kontinuierlich und innerhalb der vorgegebenen Zeitgrenzen erfolgt. Sinnvollerweise beträgt bei Druckweiterverarbeitungsmaschinen die Dauer zwischen der Aufnahme des ersten Bildes einer Bildserie und der Wiedergabe nicht mehr als drei Sekunden, da sonst der der Bezug zu den reellen Abläufen verloren geht.

Um dem Bediener so zeitnah wie möglich die aufgenommenen Bilder anzuzeigen, ist es denkbar, dass die Wiedergabe ohne merkliche Zeitverzögerung bereits in dem Arbeitstakt beginnt, in dem das erstes Bild einer Bildserie aufgenommen wurde.

Insgesamt lässt sich so durch Einsatz des erfindungsgemässen Verfahrens die Einstellung der Betriebsparameter der Verarbeitungsstationen deutlich beschleunigen, wobei gleichzeitig in zuverlässiger Weise ein besseres Einstellergebnis erhalten wird. Erfindungsgemäß wird bei der Wiedergabe der Bilder ein zeitlicher Abstand zwischen zwei Bildern gegenüber dem zeitlichen Abstand beim Aufnehmen der Bilder verändert. Besonders vorteilhaft ist, wenn bei der Wiedergabe der Bilder der zeitliche Abstand zwischen zwei Bildern gegenüber dem zeitlichen Abstand beim Aufnehmen der Bilder vergrössert wird und dadurch eine Echtzeit-Zeitlupendarstellung erzeugt und dargestellt wird.

Es ist auch denkbar, dass bei langsam ablaufenden Bewegungen und Arbeitsschritten bei der Wiedergabe der Bilder der zeitliche Abstand zwischen zwei Bildern gegenüber dem zeitlichen Abstand beim Aufnehmen der Bilder verkleinert wird und demzufolge eine Zeitrafferdarstellung erzeugt und dargestellt wird. Der Beginn der Wiedergabe der Bildserie auf der Ausgabevorrichtung kann bei der Zeitrafferdarstellung aber nicht wie bei der Zeitlupendarstellung unmittelbar nach der Aufnahme des ersten Bildes beginnen. Denn die Wiedergabe muss verzögert beginnen, so dass die Aufnahme des letzten Bildes der Bildserie vor seiner Wiedergabe erfolgen kann.

Es hat sich gezeigt, dass es besonders vorteilhaft ist, wenn die Dauer der Wiedergabe der Bilder kleiner oder gleich lang ist wie die Dauer eines Arbeitstaktes, in dem die Bilder aufgenommen wurden. Damit können beispielsweise schnelle, sich in jedem Arbeitstakt wiederholende Bewegungen von Maschinenbauteilen dargestellt werden, und zwar von jedem Arbeitstakt hintereinander und in Echtzeit.

Beim Anwenden des erfindungsgemässen Verfahrens beispielsweise bei komplexen Vorgängen mit mehreren beteiligten Bauteilen, kann bei der Wiedergabe der Bilder der zeitliche Abstand zwischen zwei Bildern gegenüber dem zeitlichen Abstand beim Aufnehmen der Bilder grösser gewählt beziehungsweise eingestellt werden. Damit kann eine Zeitlupendarstellung erzeugt und dargestellt werden, bei der die Wiedergabe der Bilder während einer Dauer erfolgt, die länger ist als die Dauer des Arbeitstakts, in dem die Bilder aufgenommen wurden. Damit sind aber je nach Dauer der Zeitlupendarstellung nur Darstellungen der betrachteten Vorgänge von jedem x-ten Arbeitstakt möglich, wobei x grösser oder gleich zwei ist.

Ein Zeitpunkt für das Aufnehmen des ersten Bildes der Bildserie wird vorteilhaft durch einen der Druckweiterverarbeitungsmaschine zugeordneten, mit der Bilderfassungseinrichtung und/oder der Recheneinheit verbundenen Positionsgeber, welcher synchron mit der Maschine arbeitet, bestimmt. Dadurch kann erreicht werden, dass die Bildserie innerhalb eines Arbeitstaktes immer zu einem gewünschten Zeitpunkt beginnt.

Alternativ zur Verwendung eines Positionsgebers kann ein Zeitpunkt für das Aufnehmen des ersten Bildes der Bildserie auch durch die Bilderfassungseinrichtung bestimmt werden, indem in einem von der Bilderfassungseinrichtung erfassten Bild die Lage von Maschinenteilen oder von zu verarbeitenden Druckprodukten detektiert wird. Als weitere Alternative zur Verwendung eines Positionsgebers kann der Zeitpunkt für das Aufnehmen des ersten Bildes der Bildserie durch entsprechend angeordnete Initiatoren oder Fotozellen (Lichtschranken) bestimmt werden, mit denen ebenfalls die Lage von Bauteilen und/oder Druckprodukten detektiert wird. Mit den alternativen Ausführungsvarianten kann erreicht werden, dass die Bildserie während eines Arbeitstakts immer genau dann startet, wenn sich ein Druckprodukt oder ein Maschinenbauteil in einer bestimmten Lage befindet. Beispielsweise soll eine Bildserie starten, kurz bevor ein Druckprodukt an einem Anschlag ausgerichtet wird oder wenn die sich absenkende Schneide eines Schneidmessers auf ein Druckprodukt auftrifft. Es ist auch vorgesehen, dass der Zeitpunkt für das Aufnehmen des ersten Bildes der Bildserie in Bezug auf die Winkelstellung des Positionsgebers bzw. in Bezug auf die Lage der Bauteile und/oder Druckprodukten durch den Bediener verändert werden kann. Damit kann der Bediener erreichen, dass die Aufnahme und Wiedergabe einer Bildserie wie oben erwähnt genau dann beginnt, wenn ein zu überwachender oder zu beobachtender Vorgang der Druckweiterverarbeitungsmaschine stattfindet. Durch ändern eines Betriebsparameters wie z.B. der Maschinengeschwindigkeit oder des Formats eines Druckprodukts kann sich der Augenblick, der für den Bediener von Interesse ist, verschieben.

Bei einer Änderung der Geschwindigkeit der Druckweiterverarbeitungsmaschine werden bei einer Ausführungsform des Verfahrens die zeitlichen Abstände zwischen den Bildern bei der Wiedergabe konstant gehalten. Wird mit dem erfindungsgemässen Verfahren bei zunehmender Geschwindigkeit der Druckweiterverarbeitungsmaschine eine Bildserie mit einer Anzahl Bilder während der Dauer eines Arbeitstakts wiedergegeben, so verkleinert sich der zeitliche Abstand zwischen jeweils zwei Bildern. Für den Bediener kann es aber zum besseren Vergleich von Vorgängen vorteilhaft sein, wenn die Wiedergabe der aufgenommenen Bilder mit gleicher Zeitlupendarstellung erfolgt, d.h. der zeitliche Abstand zwischen zwei Bilder konstant bleibt. Allerdings können im beschriebenen Fall nicht mehr alle Bilder dargestellt werden, da die Wiedergabe von allen Bildem der Bildserie länger als ein Arbeitstakt dauert. Oder es sind wie oben beschrieben nur Darstellungen der betrachteten Vorgänge von jedem x-ten Arbeitstakt möglich.

Bei einer weiteren Ausführungsform des Verfahrens werden beim Aufnehmen und/oder Wiedergeben die zeitlichen Abstände zwischen den Bildern insbesondere zwischen zwei aufeinanderfolgenden Bildern einer Bildserie verändert. Dabei können die zeitlichen Abstände zwischen zwei aufeinander folgenden Bildern einer Bildserie unterschiedlich eingestellt werden. Die Veränderung der zeitlichen Abstände sowie die Anzahl der während einem Arbeitstakt aufgenommenen Bilder einer Bildserie kann beispielswiese direkt an der Recheneinheit eingegeben werden oder über ein Eingabegerät, welches über eine Datenleitung oder kabellos mit der Recheneinheit verbunden ist, an diese übermittelt werden. Es ist auch denkbar, dass ein Bediener aus vorgegebenen Werten, welche in der Recheneinheit abgespeichert oder an diese übermittelt werden, die zeitlichen Abstände auswählt.

Durch visuelle Darstellung der Bilder im Rahmen der weiteren Verarbeitung in der Recheneinheit kann die Lageabweichung in allen drei Dimensionen dargestellt und auch mittels Bildverarbeitung quantitativ errechnet werden. Es kann also die zeitliche Abweichung der Lage und die geometrische Abweichung der Form eines Druckproduktes von einem errechneten oder vorbestimmten Wert bestimmt werden. Weiter kann aber auch eine Variation des Abstands zwischen der Bilderfassungseinrichtung und einem Druckprodukt durch einen veränderten Abbildungsmassstab eines Druckprodukts festgestellt werden. Ebenso können mittels Bildverarbeitung im Rahmen der weiteren Verarbeitung Abweichungen automatisch erfasst und manuell durch einen Bediener oder automatisch durch eine mit der Recheneinheit verbundene Steuerung korrigiert werden.

Wie vorstehend bereits erläutert, hat es sich im Rahmen der Erfindung als sinnvoll erwiesen, wenn die Bilddaten bei der weiteren Verarbeitung mit vorgegebenen Solldaten verglichen werden, und wenn bei Abweichungen voneinander die Betriebsparameter der Druckweiterverarbeitungsmaschine dementsprechend automatisch verändert bzw. angepasst werden. Bei diesen Betriebsparametern handelt es sich beispielsweise um Einstellungen von Antriebsmotoren (z.B. Servomotoren), die dazu dienen, eine Druckweiterverarbeitungsmaschine mit vorgelagerten oder nachfolgenden Verarbeitungseinrichtungen zu synchronisieren sowie um Verstell- bzw. Einstellmotoren, um Ein- und Ausschaltpunkte sowie um Durchflussmengen von Druck- und Vakuumventilen und Injektoren. Mit dem erfindungsgemässen Verfahren werden Änderungen der Einstellungen sofort und ohne Verzögerung sichtbar und messbar.

Es hat sich als vorteilhaft erwiesen, wenn die Vorrichtung zum Überwachen einer Druckweiterverarbeitungsmaschine eine Bedieneinheit aufweist, mit der der Bediener auf einfache Art und Weise einen zeitlichen Abstand zwischen zwei Bildern einer Bildserie für die Wiedergabe verändern, insbesondere vergrössern kann. Es ist auch hilfreich, wenn weitere Einstellungen der Ausgabevorrichtung, wie z.B. verändern des dargestellten Bereichs eines Bildes sowie verändern der Helligkeit, des Kontrast und der Farbe, mit der Bedieneinheit vorgenommen werden können. Weiter ist es vorteilhaft, wenn mit der Bedieneinheit vor oder während dem Betrieb der Druckweiterverarbeitungsmaschine auch Einstellungen der Bilderfassungseinrichtung wie z.B. das Festlegen des Beginns der Aufnahme, der Anzahl Bilder, die aufgenommen werden, des zeitlichen Abstands zwischen zwei Bildern, usw. vorgenommen werden können. Es ist auch denkbar, dass die Zeitdauer zwischen Aufnahme und Wiedergabe der Bilder vom Bediener manuell vorgegeben wird. Es ist aber vorteilhaft, wenn die erfindungsgemässe Vorrichtung automatisch eine möglichst kurze Zeitdauer zwischen Aufnahme und Wiedergabe der Bilder berechnet und/oder vorgibt wobei die Zeitdauer beispielsweise von der Grösse und/oder der Auflösung der Bilder, der Anzahl der aufzunehmenden Bilder, der Geschwindigkeit mit der die Bilddaten in den Komponenten der Vorrichtung zum Überwachen einer Druckweiterverarbeitungsmaschine verarbeitet werden können, abhängig ist.

Die Bedienung der Vorrichtung zum Überwachen einer Druckweiterverarbeitungsmaschine kann besonders einfach erfolgen, wenn die Ausgabevorrichtung als Bildschirm insbesondere als Bildschirm mit berührungsempfindlichem Display ausgebildet ist. Auch wenn die Bedieneinheit über einen berührungsempfindlichen Bildschirm verfügt oder im berührungsempfindlichen Bildschirm integriert ist, kann der Bediener einfach und direkt Eingaben vornehmen.

Die Anzahl der Datenleitungen und somit auch die Anzahl von möglichen Fehlerquellen können reduziert werden, wenn bei einer weiteren Ausgestaltung der erfindungsgemässen Vorrichtung die Recheneinheit in der Bilderfassungseinrichtung oder der Ausgabevorrichtung integriert ist.

Für die Wiedergabe von Bildern auf der Ausgabevorrichtung in Echtzeit ist es vorteilhaft, wenn die Vorrichtung zur Überwachung einer Druckweiterverarbeitungsmaschine Datenverbindungen aufweist, mit denen die digitalen Daten der Bilder praktisch ohne Verzögerung übermittelt werden. Die zwischen der Bilderfassungseinrichtung, der Recheneinheit, der Bedieneinheit und der Ausgabevorrichtung angeordneten Datenleitungen sind in einer Weiterbildung der Erfindung zumindest teilweise als Bussystem ausgebildet.

Eine besonders hohe Variabilität beim Einsatz des erfindungsgemässen Verfahrens ist erreichbar, wenn die Bilddaten drahtlos zwischen den Komponenten einer Vorrichtung zur Überwachung einer Druckweiterverarbeitungsmaschine übertragen werden und/oder mindestens eine Bilderfassungseinrichtung drahtlos zum Erfassen von Bilddaten angesteuert wird, weil die Bilderfassungseinrichtung dann unabhängig von Signalübertragungs- oder Datenleitungen eingesetzt werden kann.

Mit dem erfindungsgemässen Verfahren und der erfindungsgemässen Vorrichtung kann somit eine kontinuierliche Überprüfung der Verarbeitung von Druckprodukten in Echtzeit durchgeführt werden. Dabei können der Vorrichtung zur Überwachung einer Druckweiterverarbeitungsmaschine mindestens jeweils eine ggf. kabellose, beispielsweise über ein Funknetz mit der Recheneinheit verbundene Ausgabevorrichtung und/oder eine Bilderfassungseinrichtung zugeordnet sein.

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich verwiesen wird, erläutert. In der Zeichnung zeigen
- **Fig. 1a**: eine schematische Darstellung einer Vorrichtung zum Überwachen einer Druckweiterverarbeitungsmaschine mit einer Bilderfassungseinrichtung in einer ersten Stellung,
- **Fig. 1b**: eine schematische Darstellung der Vorrichtung gemäss Fig. 1 a in einer zweiten Stellung,
- **Fig. 2**: eine schematische Darstellung der Vorrichtung zum Überwachen einer Druckweiterverarbeitungsmaschine und
- **Fig. 3**: eine Darstellung der zeitlichen Abstände bei der Aufnahme und der Wiedergabe von Bildern.

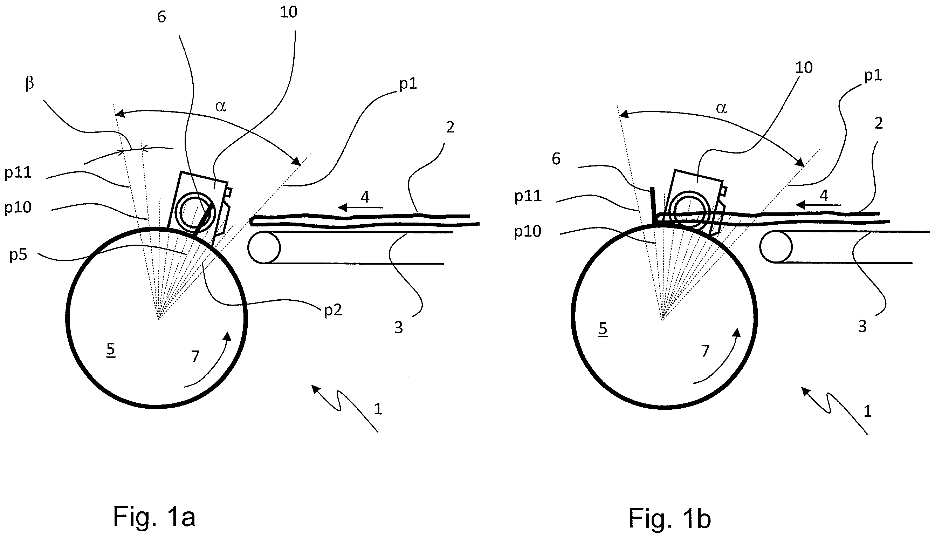

In den Fig. 1a und 1b ist eine Vorrichtung 1 zum Überwachen einer nicht vollständig gezeigten Druckweiterverarbeitungsmaschine dargestellt, bei der Druckprodukte 2 auf einer Fördervorrichtung 3 liegend in einer Transportrichtung 4 transportiert werden. Die angetriebene Fördervorrichtung 3 ist beispielsweise als Band, Riemen oder Kette mit oder ohne Nocken ausgebildet. Es ist auch denkbar, dass die Fördervorrichtung 3 als ortsfesten Rollentisch oder als Führungsanordnung, beispielsweise als ebener Tisch mit einer reibungsarmen Oberfläche, ausgebildet ist und die Druckprodukte 2 mittels Greifern, Mitnehmern oder Transportfingern bewegt werden. Die Fördervorrichtung 3 führt die Druckprodukte 2 einer Trommel 5 zu, welche einen oder mehrere voneinander beabstandete sowie am Umfang der Trommel 5 verteilte Anschläge 6 aufweist. Die Anschläge 6 laufen in der durch einen Pfeil angedeuteten Drehrichtung 7 am Umfang der Trommel 5 um und sind in axialer Richtung der Trommel 5 voneinander beabstandet. Fig. 1a) zeigt eine Momentaufnahme zu einem Zeitpunkt, kurz bevor das Druckprodukt 2 den Anschlag 6 erreicht, während Fig. 1b) eine Momentaufnahme zu dem Zeitpunkt darstellt, an dem das Druckprodukt 2 den Anschlag 6 erreicht hat und an diesem ausgerichtet wurde. Im Bereich wo sich das Druckprodukt 2 dem Anschlag 6 nähert und schliesslich an ihm ausgerichtet wird, ist eine Bilderfassungseinrichtung 10 angeordnet, die beispielsweise als Kamera ausgebildet ist. Vorteilhaft ist die Verwendung einer Digitalkamera, die einen elektronischen Bildwandler, der als zweidimensionaler CCD-Sensor bekannt ist, aufweist. Die mit der Digitalkamera aufgenommenen Bilder (Fotos und/oder Videos) bestehen aus Daten, die bei Bedarf auf einem digitalen Speichermedium abgespeichert werden können. Im Gegensatz zu auf einem Film aufgenommenen Bildern einer Analogkamera können die digitalen Bilddaten einer Digitalkamera sehr einfach und schnell übermittelt, bearbeitet, angezeigt und/oder gespeichert werden. Die Bilderfassungseinrichtung 10 ist gemäss Fig. 1 seitlich der Trommel 5 positioniert, so dass von dem Vorgang des Annäherns und des Ausrichtens des Druckprodukts 2 am Anschlag 6 eine Anzahl n von Bildern p1...pn aufgenommen werden können.

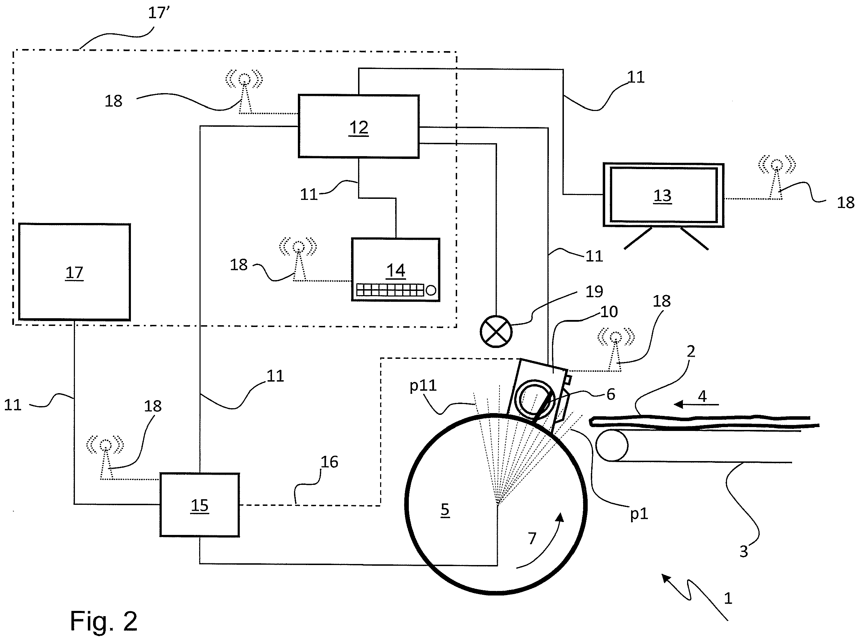

Wie Fig. 2 zeigt, ist die Bilderfassungseinrichtung 10 über eine Datenleitung 11 mit einer Recheneinheit 12 verbunden. Weiter sind über Datenleitungen 11, welche zumindest teilweise als Bussystem ausgebildet sein können, eine Bedieneinheit 14 und eine Ausgabevorrichtung 13 mit der Recheneinheit 12 verbunden. Mit der Bedieneinheit 14 kann ein Bediener Einstellungen an der Bilderfassungseinrichtung 10, der Recheneinheit 12 und der Ausgabevorrichtung 13 vornehmen. Die Ausgabevorrichtung 13 eignet sich zum Darstellen von monochromen oder farbigen Bildern, welche von der Recheneinheit 12 übermittelt werden. Sie kann bspw. als handelsüblichen Computerbildschirm ausgebildet sein, der stationär aufgestellt ist. In einer bevorzugten Ausführungsform ist die Ausgabevorrichtung 13 als tragbares, mobiles Gerät mit einem Bildschirm ausgebildet, das vom Bediener an jeden beliebigen Ort mindestens entlang der Druckweiterverarbeitungsmaschine mitgenommen werden kann und sich zur Wiedergabe der aufgenommen Bilder eignet. Die Vorrichtung 1 kann auch mehrere mit der Recheneinheit 13 verbundene, mobile und/oder stationäre Ausgabevorrichtungen 13 aufweisen. Zur einfachen Bedienung der Ausgabevorrichtung 13 kann es vorteilhaft sein, wenn ihr Bildschirm berührungsempfindlich ausgebildet ist. Es ist demzufolge denkbar, dass die Ausgabevorrichtung 13 als Laptop, als Tablet-Computer oder als Smartphone ausgebildet ist. Gleiches gilt für die Bedieneinheit 14, wobei die Ausgabevorrichtung 13 und die Bedieneinheit 14 in einem Gerät vereint sein können.

Zur Erfassung des Drehwinkels und der Drehgeschwindigkeit der Trommel 5 kann ein Positionsgeber 15 mit dem nicht dargestellten Antrieb der Trommel 5 verbunden oder direkt auf der Drehachse der Trommel 5 angebracht sein. Die Signale des Positionsgebers 15 werden über eine Datenleitung 11 an die Recheneinheit 12 übermittelt. Es ist auch denkbar, dass die Positionsinformationen des Drehgebers 15 direkt über eine weitere Datenleitung 16 mit der Bilderfassungseinrichtung 10 verbunden ist. Zur Steuerung der Druckweiterverarbeitungsmaschine kann es notwendig sein, dass der Positionsgeber 15 auch mit einer Maschinensteuerung 17 der Druckweiterverarbeitungsmaschine verbunden ist. Es ist auch denkbar, dass die Recheneinheit 12 und/oder die Bedieneinheit 14 Teil einer Maschinensteuerung 17' der Druckweiterverarbeitungsmaschine sind. Wird eine in Fig. 2 mit einer strichpunktierten Linie dargestellte Maschinensteuerung 17' verwendet, entfällt die Maschinensteuerung 17. Die Recheneinheit 12 kann aber auch in der Bilderfassungseinrichtung 10 oder der Ausgabevorrichtung 13 integriert sein. Oder aber die Recheneinheit 12, die Bilderfassungseinrichtung 10, die Bedieneinheit 14 bilden mit der Ausgabevorrichtung 13 eine Einheit und sind in einem Gerät vereint.

Um mehr Bewegungsfreiraum beim Arbeiten mit der Vorrichtung 1 zum Überwachen der Druckweiterverarbeitungsmaschine zu haben, können einzelne oder alle Datenleitungen 11 zwischen den oben erwähnten Komponenten 12, 13, 14, 15 der Vorrichtung 1 durch eine kabellose Datenübertragung, bspw. mittels WLAN oder Bluetooth, ersetzt werden. Dazu werden die Komponenten 12, 13, 14, 15 mit einer Sende- und Empfangseinheit 18 für den drahtlosen Datenaustausch verbunden oder sie sind in diese bereits integriert.

Der Bediener muss die Phasenlage der Bewegung der Trommel 5 so einstellen, dass das Druckprodukt 2 im richtigen Augenblick auf den Anschlag 6 auftrifft. Eine vollständige Umdrehung de Trommel 5 entspricht in diesem Ausführungsbeispiel einem Arbeitstakt. Erfindungsgemäss wird in dem relevanten Teil des Arbeitstakts, der in der Fig. 1 mit dem Winkel α bezeichnet ist und einen Bereich von etwa 60° darstellt, mit der Bilderfassungseinrichtung 10 eine Anzahl n von Bildern p1...pn aufgenommen. Dabei wird beispielsweise jeweils nach einer Drehung des Anschlags 6 um einem Winkel β, der 6° beträgt, ein Bild aufgenommen. Von dem relevanten Ausschnitt mit dem Winkel α von 60° des durch eine Vollumdrehung der Trommel 5 um 360° gebildeten Arbeitstakts nimmt die Bilderfassungseinrichtung 10 in diesem Beispiel elf Bilder p1...p11 auf. Selbstverständlich können auch mehr oder weniger Bilder vom relevanten Bereich aufgenommen werden. Beispielsweise kann der Winkel α des relevanten Bereichs auch nur 15° oder aber 120° oder mehr betragen. Oder der Winkel β zwischen zwei Aufnahmen beträgt lediglich 1° oder mehr als 6°.

Optional kann der von der Vorrichtung 1 überwachte Bereich von einer Beleuchtungsvorrichtung 19 dauernd oder kurzzeitig beleuchtet werden, um die Qualität der aufgenommenen Bilder p1...pn zu erhöhen (Fig. 2). Die Beleuchtungsvorrichtung 19 kann in der Bilderfassungseinrichtung integriert sein und von dieser angesteuert werden oder wie in Fig. 2 als eigenständige, frei platzierbare und mit der Recheneinheit 12 verbundene Einheit ausgebildet sein.

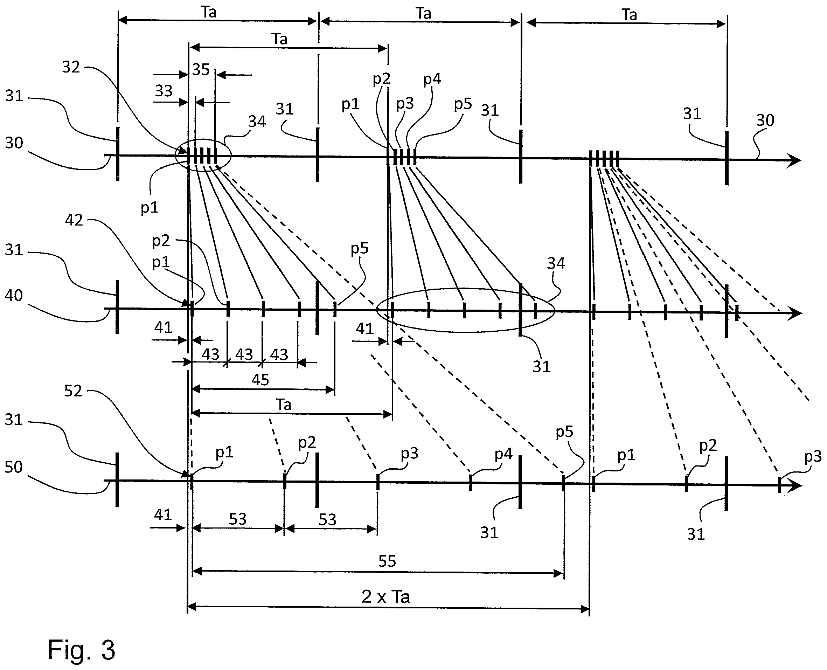

In Fig. 3 sind drei von links nach rechts verlaufende Zeitachsen übereinander dargestellt. Auf einer obersten Zeitachse 30 sind beispielshaft drei aufeinander folgende Arbeitstakte dargestellt. Jeder der drei Arbeitstakte hat eine Dauer Ta, die bei konstanter Geschwindigkeit der Druckweiterverarbeitungsmaschine jeweils gleich lang ist. Ein in Fig. 3 mit 31 bezeichneter Beginn eines Arbeitstaktes wird üblicherweise von einer definierten Winkelstellung eines Antriebsmotors, eines Positionsgebers oder von einem Sensor, an dem pro Arbeitstakt einmal ein den Sensor schaltendes Element wie bspw. ein Nocken vorbeibewegt wird, bestimmt. Das Ende eines Arbeitstaktes bildet gleichzeitig den Beginn 31 des nächsten Arbeitstaktes. Während des ersten dargestellten Arbeitstaktes auf der Zeitachse 30 wird zu einem Zeitpunkt 32 ein erstes Bild p1 von der Bilderfassungseinrichtung 10 aufgenommen. Der Zeitpunkt 32 innerhalb eines Arbeitstaktes wird anhand einer bestimmten und durch den Bediener veränderbaren Stellung des Positionsgebers 15 festgelegt, d.h. dass in jedem Arbeitstakt das erste Bild p1 einer Bildserie 34 aufgenommen wird, wenn der Positionsgeber 15 eine bestimmte Stellung aufweist. Der Zeitpunkt 32 zum Start der Aufnahme kann in einer weiteren Ausführungsform statt durch den Positionsgeber 15 auch durch die Lage des Anschlags 6 oder eines anderen Maschinenbauteils sowie durch die Lage eines Druckprodukts 2 festgelegt bzw. verändert werden. So kann ein erstes Bild p1 genau dann aufgenommen werden, wenn sich das Druckprodukt 2 in der in Fig. 1a gezeigten Stellung befindet, wobei die Lage des Druckprodukts 2 von einem nicht dargestellten Sensor, bspw. einer Fotozelle detektiert oder von der Bilderfassungseinrichtung 10 erfasst wird. Bei der zuletzt genannten Ausführungsvariante nimmt die Bilderfassungseinrichtung 10 dauernd Bilder auf, welche in der Recheneinheit 12 ausgewertet werden. Die Bilder p1...p5 einer Bildserie 34 werden an die Ausgabevorrichtung 13 übermittelt, sobald das Druckprodukt 2 eine vorbestimmte Lage aufweist, d.h. wenn beispielsweise die vorlaufende Kante des in Fig. 1a transportierten Druckprodukts 2 das Ende der Transportvorrichtung 3 erreicht. Nach einem zeitlichen Abstand 33 wird ein zweites Bild p2 aufgenommen. Um die Darstellung in Fig. 3 nicht zu überlasten, werden innerhalb eines Arbeitstaktes nur für fünf Bilder p1...p5 dargestellt, welche zusammen eine Bildserie 34 bilden. Selbstverständlich kann eine Bildserie 34 auch mehr oder weniger als fünf Bilder aufweisen. Die Bilder p1 bis p5 der Bildserie 34 werden während einer Aufnahmedauer 35 gemacht und jeweils sofort an die Recheneinheit 12 übermittelt. In den nachfolgenden Arbeitstakten werden kontinuierlich zum jeweils gleichen Zeitpunkt innerhalb des Arbeitstaktes wieder Bildserien 34 aufgenommen, solange bis die Vorrichtung 1 zum Überwachen einer Druckweiterverarbeitungsmaschine abgestellt wird oder deren Einstellungen verändert werden.

Auf der mittleren Zeitachse 40 ist dargestellt, wann die Bilder p1...p5 mit der Ausgabevorrichtung 13 für den Bediener ersichtlich wiedergegeben werden. Mit dem erfindungsgemässen Verfahren erfolgt die Wiedergabe der Bilder in Echtzeit. So verstreicht zwischen dem Zeitpunkt 32, bei dem das erste Bild p1 aufgenommen wird und einem Zeitpunkt 42, zu dem das erste Bild p1 auf der Ausgabevorrichtung 13 wiedergegeben wird, eine Zeitdauer 41. Typischerweise beträgt die Zeitdauer 41 mit den heute bekannten Komponenten 10, 11, 12, 13 der Vorrichtung 1 zum Überwachen einer Druckweiterverarbeitungsmaschine zwischen 20 Mikrosekunden und 3 Sekunden. Wichtig ist, dass die Zeitdauer 41 mindestens bei unveränderten Einstellungen der Vorrichtung 1 konstant bleibt, so dass die Wiedergabe des ersten Bildes zuverlässig in jedem Arbeitstakt zur gleichen Zeit erfolgt. Um dem Bediener die aufgenommenen Bilder p1...p5 ohne merkliche Zeitverzögerung wiederzugeben, wird eine möglichst kurze Zeitdauer 41 bestimmt oder von der Recheneinheit 12 vorgegeben. Die Wiedergabe des ersten Bildes p1 kann somit wie auf der Zeitachse 40 dargestellt noch im gleichen Arbeitstakt beginnen, indem es aufgenommen wurde. Die Zeitdauer 41 kann aber auch so gross sein, dass die Wiedergabe des ersten Bildes p1 einer Bildserie 34 in einem nachfolgenden Arbeitstakt erfolgt. Die Wiedergabe des zweiten und der weitern Bilder p2...p5 erfolgt jeweils nach einem zeitlichen Abstand 43, der grösser ist als der zeitliche Abstand 33 zwischen zwei Bildern bei der Aufnahme. Für die Wiedergabe der Bildserie 34 wird somit eine Dauer 45 benötigt, die maximal so lang sein kann wie die Dauer Ta eines Arbeitstaktes. Dadurch können von jedem Arbeitstakt die aufgenommenen Bilder p1...p5 jedes Arbeitstaktes wiedergegeben werden.

Falls die Bilder p1...p5 einer Bildserie 34 während einer Dauer 55 wiedergegeben werden, die länger ist als die Dauer Ta eines Arbeitstaktes, können ein oder mehrere Bilder p1...p5 des zweiten Arbeitstaktes nicht wiedergegeben werden. In Fig. 3 auf der untersten Zeitachse 50 ist ersichtlich, dass immer noch Bilder der ersten Bildserie 34 wiedergegeben werden, obschon im zweiten Arbeitstakt bereits von einem weiteren Vorgang Bilder p1...p5 aufgenommen werden. Wird demzufolge der zeitliche Abstand 53 zwischen zwei Bildern p1...p5 bei der Wiedergabe jeweils so gross gewählt, dass die Dauer 55 für die Wiedergabe der Bildserie 34 grösser als die Dauer Ta eines Arbeitstaktes, kann nur jeder zweite Arbeitstakt mit der Vorrichtung 1 überwacht werden. Wird der zeitliche Abstand 43, 53 zwischen zwei Bildern bei der Wiedergabe noch weiter vergrössert oder werden so viele Bilder während der Dauer Ta eines Arbeitstaktes gemacht, dass die Dauer 45, 55 für die Wiedergabe einer Bildserie 34 länger dauert als x Arbeitstakte, kann nur jeder x-te Arbeitstakt überwacht werden. Wie auf der Zeitachse 50 dargestellt erfolgt die Wiedergabe der Bilder p1...pn ab einem Zeitpunkt 52, der gegenüber der Aufnahme des ersten Bildes p1 zum Zeitpunkt 32 ebenfalls um die oben erwähnte Zeitdauer 41 verzögert ist.

Die Vorrichtung 1 zum Überwachen einer Druckweiterverarbeitungsmaschine kann in einer Ausführungsform zusätzlich zur neuen Möglichkeit, die Bilder p1...pn nach der Aufnahme in Echtzeit wiederzugeben, auch zum Abspeichern der aufgenommenen Bilder p1...pn auf einem Speichermedium ausgebildet sein. Das Speichermedium kann in der Bilderfassungseinrichtung 10, der Recheneinheit 12 oder in einem mit der Vorrichtung 1 zum Übermitteln von Daten verbundenen Datenspeicher angeordnet sein. Damit wird dem Bediener die Möglichkeit gegeben, die abgespeicherten Bilder p1...pn noch während des Betriebs der Druckweiterverarbeitungsmaschine oder danach aufzurufen und auf der Ausgabevorrichtung anzuzeigen.

Mittels der Bedieneinheit 14 können die zeitlichen Abstände 33, 43, 53 zwischen den Bildern p1...pn insbesondere zwischen zwei aufeinanderfolgenden Bildern p1...pn einer Bildserie 34 bei beim Aufnehmen und/oder beim Wiedergeben verändert werden. So können beispielsweise die zeitlichen Abstände 33 zwischen zwei Bildern bei der Aufnahme einer Bildserie 34 immer kürzer werden, so dass der zeitliche Abstand 33 zwischen dem Bild p1 und dem Bild p2 grösser ist als der zeitliche Abstand 33 zwischen dem Bild p4 und dem Bild p5. Die Veränderung des zeitlichen Abstandes 33 kann dabei nur für einen Arbeitstakt, für eine durch den Bediener wählbare Anzahl von Arbeitstakten oder für alle folgenden Arbeitstakte gelten.

Der Bediener kann mit der Bedieneinheit 14 beispielsweise folgende Einstellungen an der Vorrichtung 1 zur Überwachung einer Druckweiterverarbeitungsmaschine vornehmen:
- Ein- und Ausschalten der Vorrichtung 1,
- Festlegen und verschieben des Zeitpunkts 32, zu dem das erste Bild p1 aufgenommen wird,
- Einstellen eines konstanten zeitlichen Abstandes 33 zwischen zwei Bildern p1...pn bei der Aufnahme während der ganzen Überwachungsdauer,
- Einstellen von unterschiedlichen zeitlichen Abständen 33 zwischen jeweils zwei Bildern p1...pn bei der Aufnahme einer Bildserie 34,
- Einstellen von zeitlichen Abständen 33 zwischen jeweils zwei Bildern p1...pn bei der Aufnahme einer Bildserie 34 in Abhängigkeit eines Betriebsparameters wie beispielsweise der Geschwindigkeit der Druckweiterverarbeitungsmaschine,
- Einstellen der Anzahl n von Bildern p1...pn einer Bildserie 34, die aufgenommen werden sollen,
- ggf. Wahl des von der Bilderfassungseinrichtung 10 zu erfassenden Bereichs,
- ggf. Wahl der gewünschten Vergrösserung (Zoom) der Bilderfassungseinrichtung 10,
- Festlegen, ob in jedem Arbeitstakt eine Bildserie 34 aufgenommen werden soll oder nur in jedem x-ten Arbeitstakt, wobei x grösser als 1 ist,
- Abspeichern der aufgenommenen Bilder p1...pn auf einem internen oder externen Speichermedium
- Einstellen eines konstanten zeitlichen Abstandes 43, 53 zwischen zwei Bildern p1...pn bei der Wiedergabe während der ganzen Überwachungsdauer,
- Einstellen von unterschiedlichen zeitlichen Abständen 43, 53 zwischen jeweils zwei Bildern p1...pn bei der Wiedergabe einer Bildserie 34,
- Einstellen von zeitlichen Abständen 43, 53 zwischen jeweils zwei Bildern p1...pn bei der Wiedergabe einer Bildserie 34 in Abhängigkeit eines Betriebsparameters wie beispielsweise der Geschwindigkeit der Druckweiterverarbeitungsmaschine,
- Anhalten und Wiederaufnehmen der Wiedergabe der Bilder p1...pn auf der Ausgabevorrichtung 13 zu jedem beliebigen Zeitpunkt um ein Bild so lange wie gewünscht anzuzeigen,
- Verändern eines auf der Ausgabevorrichtung dargestellten Bereichs bspw. durch vergrössern eines Bildausschnitts,
- Auswahl einer Anzahl von Bildern p1...pn einer Bildserie 34, die mit der Ausgabevorrichtung wiedergegeben werden,
- ggf. Auswahl des den Zeitpunkt 32 zur Aufnahme des ersten Bildes p1 bestimmenden Signals, z.B. das Signal des Positionsgebers 15, eines als Fotozelle ausgebildeten Lagesensors oder der Bilderfassungseinrichtung 10,
- Wahl der Ausgabevorrichtung 13 für die Wiedergabe der aufgenommenen Bilder p1...pn, falls die Vorrichtung 1 mehrere Ausgabevorrichtungen 13 aufweist,
- Wiedergeben von abgespeicherten Bildern p1...pn noch während des Betriebs der Druckweiterverarbeitungsmaschine oder danach,
- Ein- Ausschalten von ggf. vorhandenen Beleuchtungsmitteln, die den von der Bilderfassungseinrichtung 10 erfassten Bereich dauernd oder kurzzeitig beleuchten,
- Verändern von Eigenschaften der auf er Ausgabevorrichtung 13 dargestellten Bilder wie z.B. Helligkeit, Kontrast, Farbe und der Orientierung des Bildes.

Unter der Annahme, dass die Druckweiterverarbeitungsmaschine pro Stunde 18'000 Druckprodukte verarbeitet, was auch mit 18'000 Takten pro Stunde bezeichnet wird, dauert ein einziger Arbeitstakt 200ms und das Durchlaufen des Anschlags 6 durch den in Fig. 1 a und 1b dargestellten relevanten Bereich mit dem Winkel α von 60° dauert etwa 33ms. Beim Abspielen der während dieser 33ms des Arbeitstaktes aufgenommenen elf Bilder p1...p11 steht die gesamte Dauer Ta des Arbeitstakts zur Verfügung. Da die Bilder nur während eines Sechstels des Arbeitstaktes (α=60°) aufgenommen werden, steht für das Abspielen eine sechsfache Zeit zur Verfügung, was einer Zeitlupe mit einem Faktor von 6 entspricht. Trotz der sechsmal langsameren Wiedergabe der Bilder wird kein Arbeitstakt bzw. kein Druckprodukt verpasst. Daher kann der Anwender die Auswirkung einer Änderung von Betriebsparametern in Echtzeit sehen, was durch die beschriebene Zeitlupe erreicht wird. Optional kann beispielsweise bei sehr hohen Geschwindigkeiten die Zeitlupe auch über x Arbeitstakte verteilt werden, wobei dann nur für jeden x-ten Takt eine Zeitlupe dargestellt werden kann.

Die Wiedergabedauer der Zeitlupe bzw. die Wiedergabegeschwindigkeit der aufgenommenen Bilder kann in einer weiteren Ausführungsform auch unabhängig von der Geschwindigkeit der Druckweiterverarbeitungsmaschine konstant gehalten werden. Da mit zunehmender Geschwindigkeit die Dauer Ta eines Arbeitstakts kürzer wird, bleibt weniger Zeit für die Wiedergabe der aufgenommenen Bilder, wodurch der Faktor der Zeitlupe abnimmt.

Insgesamt bieten die erfindungsgemässen Verfahren und Vorrichtungen die Möglichkeiten, Einstellungen an der laufenden Druckweiterverarbeitungsmaschine vorzunehmen und diese kontinuierlich und in Echtzeit mittels der Zeitlupendarstellung zu überprüfen und/oder eine automatische Korrektur mittels motorischer Verstellung von Betriebsparametern der Druckweiterverarbeitungsmaschine abzuleiten.
Generell kann die Erfindung bei der Verarbeitung von Druckprodukten 2 überall dort eingesetzt werden, wo eine Überwachung eines Verarbeitungsprozesses zur Prozess-Sicherheit beiträgt. Die mindestens eine Bilderfassungseinrichtung 10 kann dabei als mobile oder als fest installierte Einheit eingesetzt werden. Da die Verarbeitung von flächigen Druckprodukten 2 von vielen nicht beeinflussbaren Störgrössen unterworfen ist, macht eine erfindungsgemässe Überwachung vor allem da Sinn, wo im Verarbeitungsprozess Richtungswechsel stattfinden, Geschwindigkeiten ändern, Reibverhältnisse ändern, Strömungsverhältnisse ändern, Druckprodukte veredelt, Teilprodukte zusammengeführt oder getrennt werden. Die permanente Bilderfassung und Abspeicherung ermöglicht zudem via Fernzugriff oder direkt vor Ort eine verbesserte Diagnosemöglichkeit im Fehlerfall. Ein weiterer Vorteil der erfindungsgemässen Vorrichtung liegt darin, dass mit der Bilderfassungseinrichtung 10 die bestehende Sensorik, wie Barcodeleser und Lichtschranken durch eine einzige Komponente ersetzt werden kann.

Die Erfindung ist nicht auf die anhand der Zeichnung dargestellten Ausführungsbeispiele beschränkt. Vielmehr ist auch daran gedacht, Sammelhefter, Buchbindemaschinen oder andere Druckweiterverarbeitungsmaschinen zu überwachen und ggf. automatische Korrekturen von deren Betriebsparametern vorzunehmen. Selbstverständlich kann die Erfindung auch zum Überwachen einer Druckmaschine eingesetzt werden.

## Patentansprüche

1. Verfahren zum Überwachen einer Druckweiterverarbeitungsmaschine, durch die Druckprodukte (2) nacheinander transportiert werden, bei dem eine der Druckweiterverarbeitungsmaschine zugeordnete, mit einer Recheneinheit (12) verbundene Bilderfassungseinrichtung (10) jeweils während eines Arbeitstakts eine Bildserie (34) mit mindestens zwei Bildern (p1...pn) eines Druckprodukts (2) mit einem zeitlichen Abstand (33) aufnimmt, wobei der Recheneinheit (12) die Bildern (p1...pn) übermittelt werden, **dadurch gekennzeichnet dass** die Bilder (p1...pn) der Bildserie (34) auf einer mit der Recheneinheit (12) verbundenen Ausgabevorrichtung (13) wiedergegeben werden, wobei die Wiedergabe der Bilder (p1...pn) auf der Ausgabevorrichtung (13) in Echtzeit erfolgt; und dass bei der Wiedergabe der Bilder (p1... pn) ein zeitlicher Abstand (43, 53) zwischen zwei Bildern (p1... pn) gegenüber dem zeitlichen Abstand (33) beim Aufnehmen der Bilder (p1... pn) verändert wird.

2. Verfahren nach Anspruch 1, **dadurch gekennzeichnet, dass** der zeitliche Abstand (43, 53) zwischen zwei Bildern (p1... pn) bei der Wiedergabe gegenüber dem zeitlichen Abstand (33) beim Aufnehmen der Bilder (p1...pn) zur Erzeugung einer Echtzeit-Zeitlupendarstellung vergrössert wird.

3. Verfahren nach einem der Ansprüche 1 oder 2, **dadurch gekennzeichnet, dass** die Wiedergabe der Bilder (p1...pn) während einer Dauer (45) erfolgt, die maximal einer Dauer (Ta) des Arbeitstakts entspricht, in dem die Bilder (p1... pn) aufgenommen wurden.

4. Verfahren nach einem der Ansprüche 1 oder 2, **dadurch gekennzeichnet, dass** die Wiedergabe der Bilder (p1... pn) während einer Dauer (55) erfolgt, die länger ist als die Dauer (Ta) des Arbeitstakts, in dem die Bilder (p1... pn) aufgenommen wurden.

5. Verfahren nach einem der Ansprüche 1 bis 4, **dadurch gekennzeichnet, dass** die Wiedergabe der Bilder (p1...pn) bereits in dem Arbeitstakt beginnt, in dem ein erstes Bild (p1) der Bildserie (34) aufgenommen wurde.

6. Verfahren nach einem der Ansprüche 1 bis 5, **dadurch gekennzeichnet, dass** ein Zeitpunkt (32) für das Aufnehmen des ersten Bildes (p1) der Bildserie (34) durch einen der Druckweiterverarbeitungsmaschine zugeordneten, mit der Bilderfassungseinrichtung (10) und/oder der Recheneinheit (12) verbundenen Positionsgeber (15) oder durch die Bilderfassungseinrichtung (10) bestimmt wird.

7. Verfahren nach Anspruch 6, **dadurch gekennzeichnet, dass** der Zeitpunkt (32) für das Aufnehmen des ersten Bildes (p1) der Bildserie verändert wird.

8. Verfahren nach einem der Ansprüche 1 bis 7 **dadurch gekennzeichnet, dass** beim Aufnehmen und/oder Wiedergeben die zeitlichen Abstände (33, 43, 53) zwischen den Bildern (p1... pn) einer Bildserie verändert werden.

9. Verfahren nach einem der Ansprüche 1 bis 8 **dadurch gekennzeichnet, dass** die Anzahl der während einem Arbeitstakt aufzunehmenden Bilder (p1... pn) einer Bildserie (34) verändert wird.

10. Verfahren nach einem der Ansprüche 1 bis 9 **dadurch gekennzeichnet, dass** bei einer Änderung der Geschwindigkeit der Druckweiterverarbeitungsmaschine die zeitlichen Abstände (43, 53') zwischen den Bildern (p1...pn) bei der Wiedergabe konstant gehalten werden.

11. Vorrichtung (1) zum Überwachen einer Druckweiterverarbeitungsmaschine, mit einer Bilderfassungseinrichtung (10) zum Aufnehmen einer aus zumindest zwei Bildern (p1 ...pn) bestehenden Bildserie (34) von nacheinander durch die Druckweiterverarbeitungsmaschine transportierten Druckprodukten (2), mit einer mit der Bilderfassungseinrichtung (10) verbundenen Recheneinheit (12), an welche die Bilder (p1... pn) übermittelbar sind, **gekennzeichnet durch** eine mit der Recheneinheit (12) verbundene Ausgabevorrichtung (13) zum Wiedergeben der Bilder (p1...pn) der Bildserie (34), wobei die Vorrichtung (1) zur Wiedergabe eines ersten Bildes (p1) der Bildserie (34) in Echtzeit ausgelegt ist und dass bei der Wiedergabe der Bilder (p1...pn) ein zeitlicher Abstand (43, 53) zwischen zwei Bildern (p1...pn) gegenüber dem zeitlichen Abstand (33) beim Aufnehmen der Bilder (p1... pn) veränderbar ist.

12. Vorrichtung nach Anspruch 11, **dadurch gekennzeichnet, dass** die Vorrichtung (1) zur Wiedergabe eines ersten Bildes (p1) der Bildserie (34) innerhalb des gleichen Arbeitstakts, in dem das erste Bild (p1) aufgenommen wurde, ausgelegt ist.

13. Vorrichtung nach Anspruch 11 oder 12, **dadurch gekennzeichnet, dass** die Vorrichtung (1) eine Bedieneinheit (14) aufweist, mit der der zeitliche Abstand (43, 53) zwischen zwei Bildern (p1... pn) der Bildserie (34) für die Wiedergabe veränderbar ist.

14. Vorrichtung nach einem der Ansprüche 11 bis 13, **dadurch gekennzeichnet, dass** die Ausgabevorrichtung (13) als Bildschirm ausgebildet ist.

15. Vorrichtung nach einem der Ansprüche 11 bis 14, **dadurch gekennzeichnet, dass** die Recheneinheit (12) in der Bilderfassungseinrichtung (10) oder der Ausgabevorrichtung (13) integriert ist.

16. Vorrichtung nach einem der Ansprüche 11 bis 15 **dadurch gekennzeichnet, dass** die Ausgabevorrichtung (13) und/oder die Bilderfassungseinrichtung (10) kabellos mit der Recheneinheit (12) verbunden sind.

17. Vorrichtung nach einem der Ansprüche 11 bis 15, **dadurch gekennzeichnet, dass** die zwischen Bilderfassungseinrichtung (10), Recheneinheit (12), Bedieneinheit (14) und Ausgabevorrichtung (13) angeordneten Datenleitungen (11) zumindest teilweise als Bussystem ausgebildet sind.

18. Vorrichtung nach einem der Ansprüche 11 bis 17 **dadurch gekennzeichnet, dass** die Bilderfassungseinrichtung (10) als Digitalkamera ausgebildet ist, die einen zweidimensionalen-COD-Sensor aufweist.

## Claims

1. Method of monitoring a print finishing machine through which printed products (2) are transported one after the other, in which an image capturing device (10) associated with the print finishing machine and connected to a computer (12) records a series (34) of at least two images (p1...pn) of a printed product (2) at a time interval (33) during one operating cycle, the images (p1...pn) being transmitted to the computer (12), **characterised in that** the images (p1...pn) of the image series (34) are displayed on a display device (13) connected to the computer (12), the images (p1...pn) being displayed on the display device (13) in real time, and that the time interval (43, 53) between two images (p1...pn) when the images (p1...pn) are displayed is different from the time interval (33) when the images (p1...pn) are recorded.

2. Method according to claim 1, **characterised in that** the time interval (43, 53) between two images (p1...pn) when they are displayed is longer than the time interval (33) when the images (p1...pn) are recorded in order to produce a real-time slow-motion display.

3. Method according to either of claims 1 or 2, **characterised in that** the images (p1...pn) are displayed for a time period (45) corresponding at most to the time period (Ta) of the operating cycle during which the images (p1...pn) were recorded.

4. Method according to either of claims 1 or 2, **characterised in that** the images (p1...pn) are displayed for a time period (55) that is longer than the time period (Ta) of the operating cycle during which the images (p1...pn) were recorded.

5. Method according to one of claims 1 to 4, **characterised in that** the display of the images (p1...pn) begins in the same operating cycle during which the first image (p1) of the image series (34) was recorded.

6. Method according to one of claims 1 to 5, **characterised in that** the moment (32) for recording the first image (p1) of the image series (34) is determined by a position sensor (15) associated with the print finishing machine and connected to the image capturing device (10) and/or the computer (12) or by the image capturing device (10).

7. Method according to claim 6, **characterised in that** the moment (32) for recording the first image (p1) of the image series is varied.

8. Method according to one of claims 1 to 7, **characterised in that** the time intervals (33, 43, 53) between the images (p1...pn) of an image series when they are recorded and/or displayed are varied.

9. Method according to one of claims 1 to 8, **characterised in that** the number of images (p1...pn) of an image series (34) to be recorded during an operating cycle is varied.

10. Method according to one of claims 1 to 9, **characterised in that** the time intervals (43, 53') between the images (p1...pn) while they are displayed are kept constant when the speed of the print finishing machine is changed.

11. Device (1) for monitoring a print finishing machine, comprising an image capturing device (10) for recording a series (34) consisting of at least two images (p1...pn) of printed products (2) transported one after the other through the print finishing machine, as well as a computer (12) connected to the image capturing device (10) and to which the images (p1...pn) can be transmitted, **characterised by** a display device (13) connected to the computer (12) for displaying the images (p1...pn) of the image series (34), the device (1) being designed to display the first image (p1) of the image series (34) in real time, and in that the time interval (43, 53) between two images (p1...pn) when the images (p1...pn) are displayed can be different from the time interval (33) when the images (p1...pn) are recorded.

12. Device according to claim 11, **characterised in that** the device (1) is designed to display the first image (p1) of the image series (34) within the same operating cycle during which the first image (p1) was recorded.

13. Device according to claim 11 or claim 12, **characterised in that** the device (1) has a control unit (14) by means of which the time interval (43, 53) between two images (p1...pn) of the image series (34) can be varied for the display.

14. Device according to one of claims 11 to 13, **characterised in that** the display device (13) is designed as a screen.

15. Device according to one of claims 11 to 14, **characterised in that** the computer (12) is integrated into the image capturing device (10) or the display device (13).

16. Device according to one of claims 11 to 15, **characterised in that** the display device (13) and/or the image capturing device (10) is/are connected wirelessly to the computer (12).

17. Device according to one of claims 11 to 15, **characterised in that** the data lines (11) arranged between the image capturing device (10), computer (12), control unit (14) and display device (13) are designed at least partially as a bus system.

18. Device according to one of claims 11 to 17, **characterised in that** the image capturing device (10) is designed as a digital camera having a two-dimensional CCD sensor.

## Revendications

1. Procédé de surveillance d'une machine de finition d'impression à travers laquelle des produits imprimés (2) sont transportés en succession, dans lequel un système (10) de capture d'images, associé à ladite machine de finition d'impression et raccordé à une unité de calcul (12), enregistre avec intervalle de temps (33), au cours d'un cycle de travail respectif, une série d'images (34) renfermant au moins deux images (p1...pn) d'un produit imprimé (2), lesdites images (p1...pn) étant transmises à ladite unité de calcul (12), **caractérisé par le fait que**
les images (p1...pn) de la série d'images (34) sont reproduites sur un dispositif de sortie (13) raccordé à l'unité de calcul (12),
la reproduction desdites images (p1...pn), sur ledit dispositif de sortie (13), ayant lieu en temps réel ;
et **par le fait que**, lors de la reproduction desdites images (p1...pn), un intervalle de temps (43, 53), entre deux images (p1...pn), est modifié par rapport à l'intervalle de temps (33) alloué à l'enregistrement desdites images (p1...pn).

2. Procédé selon la revendication 1, **caractérisé par le fait que** l'intervalle de temps (43, 53) entre deux images (p1...pn) est accru par rapport à l'intervalle de temps (33) alloué à l'enregistrement desdites images (p1...pn), au cours de la reproduction, en vue d'engendrer une représentation au ralenti en temps réel.

3. Procédé selon l'une des revendications 1 ou 2, **caractérisé par le fait que** la reproduction des images (p1...pn) a lieu pendant une durée (45) correspondant, au maximum, à une durée (Ta) du cycle de travail au cours duquel lesdites images (p1...pn) ont été enregistrées.

4. Procédé selon l'une des revendications 1 ou 2, **caractérisé par le fait que** la reproduction des images (p1...pn) a lieu pendant une durée (55) supérieure à la durée (Ta) du cycle de travail au cours duquel lesdites images (p1...pn) ont été enregistrées.

5. Procédé selon l'une des revendications 1 à 4, **caractérisé par le fait que** la reproduction des images (p1...pn) débute dès le cycle de travail au cours duquel une première image (p1) de la série d'images (34) a été enregistrée.

6. Procédé selon l'une des revendications 1 à 5, **caractérisé par le fait qu'**un instant (32), dédié à l'enregistrement de la première image (p1) de la série d'images (34), est déterminé par l'intermédiaire d'un indicateur d'emplacements (15) associé à la machine de finition d'impression et raccordé au système (10) de capture d'images et/ou à l'unité de calcul (12), ou par l'intermédiaire dudit système (10) de capture d'images.

7. Procédé selon la revendication 6, **caractérisé par** une modification de l'instant (32) dédié à l'enregistrement de la première image (p1) de la série d'images.

8. Procédé selon l'une des revendications 1 à 7, **caractérisé par le fait que** les intervalles de temps (33, 43, 53), entre les images (p1...pn) d'une série d'images, sont modifiés au stade de l'enregistrement et/ou de la reproduction.

9. Procédé selon l'une des revendications 1 à 8, **caractérisé par** une modification du nombre des images (p1...pn) d'une série d'images (34) qui doivent être enregistrées au cours d'un cycle de travail.

10. Procédé selon l'une des revendications 1 à 9, **caractérisé par le fait que**, lors d'une modification de la vitesse de la machine de finition d'impression, les intervalles de temps (43, 53'), entre les images (p1...pn), sont maintenus constants au stade de la reproduction.

11. Dispositif (1) dévolu à la surveillance d'une machine de finition d'impression, comprenant un système (10) de capture d'images affecté à l'enregistrement d'une série d'images (34), constituée d'au moins deux images (p1...pn), de produits imprimés (2) transportés en succession à travers ladite machine de finition d'impression, et une unité de calcul (12) raccordée audit système (10) de capture d'images, et à laquelle lesdites images (p1...pn) peuvent être transmises, **caractérisé par** un dispositif de sortie (13) raccordé à l'unité de calcul (12) en vue de reproduire les images (p1...pn) de la série d'images (34), ledit dispositif (1) étant conçu pour reproduire, en temps réel, une première image (p1) de ladite série d'images (34) ; et par le fait que, lors de la reproduction desdites images (p1...pn), un intervalle de temps (43, 53), entre deux images (p1...pn), peut être modifié par rapport à l'intervalle de temps (33) alloué à l'enregistrement desdites images (p1...pn).

12. Dispositif selon la revendication 11, **caractérisé par le fait que** ledit dispositif (1) est conçu pour reproduire une première image (p1) de la série d'images (34) au sein du même cycle de travail au cours duquel ladite première image (p1) a été enregistrée.

13. Dispositif selon la revendication 11 ou 12, **caractérisé par le fait que** ledit dispositif (1) est doté d'une unité d'actionnement (14) par laquelle l'intervalle de temps (43, 53), entre deux images (p1...pn) de la série d'images (34), peut être modifié en vue de la reproduction.

14. Dispositif selon l'une des revendications 11 à 13, **caractérisé par le fait que** le dispositif de sortie (13) est réalisé sous la forme d'un écran.

15. Dispositif selon l'une des revendications 11 à 14, **caractérisé par le fait que** l'unité de calcul (12) est intégrée dans le système (10) de capture d'images, ou dans le dispositif de sortie (13).

16. Dispositif selon l'une des revendications 11 à 15, **caractérisé par le fait que** le dispositif de sortie (13), et/ou le système (10) de capture d'images, est (sont) raccordé(s) à l'unité de calcul (12) avec absence de câblage.

17. Dispositif selon l'une des revendications 11 à 15, **caractérisé par le fait que** les lignes de données (11) interposées entre le système (10) de capture d'images, l'unité de calcul (12), l'unité d'actionnement (14) et le dispositif de sortie (13) sont réalisées, au moins en partie, sous la forme d'un système de bus.

18. Dispositif selon l'une des revendications 11 à 17, **caractérisé par le fait que** le système (10) de capture d'images est réalisé sous la forme d'une caméra numérique munie d'un capteur CCD bidimensionnel.
